# EUROPÄISCHE PATENTSCHRIFT

(11) **EP 4 162 898 B1**
(45) Veröffentlichungstag und Bekanntmachung des Hinweises auf die Patenterteilung: **24.09.2025**
(21) Anmeldenummer: 21201443.5
(22) Anmeldetag: 07.10.2021
(51) Int. Cl.: A61C 13/08, A61C 13/00, A61C 13/10, B33Y 10/00, B33Y 80/00

(54) **VERFAHREN ZUM HERSTELLEN EINES DENTALOBJEKTS UND DENTALOBJEKT**
METHOD FOR PRODUCING A DENTAL OBJECT AND DENTAL OBJECT
PROCÉDÉ DE FABRICATION D'UN OBJET DENTAIRE ET OBJET DENTAIRE

(43) Veröffentlichungstag der Anmeldung: 12.04.2023
(73) Patentinhaber: Ivoclar Vivadent AG, 9494 Schaan (LI)
(72) Erfinder: HÄFELE, Clemens Andreas, 6800 Feldkirch (AT); HAYDL, Christoph, 9424 Rheineck (CH); SCHERRER, Pascal, 7000 Chur (CH); RUSS, Rebecca, 6835 Dafins (AT)
(74) Vertreter: Baldus, Oliver

(56) Entgegenhaltungen:
- EP-A1- 1 358 855
- WO-A1-2013/167903
- WO-A1-2018/069317
- WO-A1-2021/130624
- DE-A1- 102017 113 814
- US-A1- 2020 316 856
- US-A1- 2021 228 316

## Beschreibung

Die vorliegende Erfindung betrifft ein Verfahren zum Herstellen eines Dentalobjekts und ein Dentalobjekt mit einer Unterstützungsstruktur.

Die Entfernung von Unterstützungsstrukturen (Supportstrukturen) an Dentalobjekten ist oft mühsam und schlecht zu automatisieren. Bei der Entfernung kann es zu Materialausbrüchen und anderen Problemen kommen. Zudem verursacht die Entfernung von Unterstützungsstrukturen einen Zeitbedarf, da diese eine schlecht automatisierbare, händische Tätigkeit ist. Aufgrund des Risikos der Materialschädigung durch Hitze oder zu viel Abtrag muss die Entfernung der Unterstützungsstrukturen präzise ausgeführt werden.

Die Druckschrift US 2021/228316 A1 betrifft ein Verfahren zum Aufbau eines physischen Objekts durch additive Fertigung, das die Schritte des schichtweisen Aufbaus des Objekts und mindestens einer Stützstruktur entlang einer Aufbauachse umfasst.

Die Druckschrift DE102017113814A1 offenbart ein Verfahren zur Herstellung einer Dentalprothese, wobei die Dentalprothese aus einer Prothesenbasis und mehreren Prothesenzähnen hergestellt wird, wobei an den Wurzeln der Prothesenzähne Vorsprünge vorgesehen werden, mit denen ein Klebespalt zwischen der Prothesenbasis und den Prothesenzähnen überbrückt wird.

Die Druckschrift US 2020/316856 A1 betrifft ein Verfahren zum Herstellen eines dreidimensionalen (3D) mit einer Trägerstruktur, bei dem die Trägerstruktur das 3D-Objekt an einem Trägerbereich des 3D-Objekts berührt.

Die Druckschrift WO 2021/130624 A1 betrifft einen additiv gefertigten kieferorthopädischen Aufsatz, der einen Körper umfasst, der ein Halteelement bildet, das den Artikel in einer Vertiefung festhält.

Es ist die technische Aufgabe der vorliegenden Erfindung ein Dentalobjekt mit einer Unterstützungsstruktur bereitzustellen, die auf einfache Weise entfernt werden kann.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen eines Dentalobjektsystems aus einem Zahnbogen und einer Prothesenbasis gelöst, mit dem Schritt eines Erzeugens einer Unterstützungsstruktur an dem Zahnbogen mit einer Sollbruchstelle, die so angeordnet ist, dass nach dem Trennen der Sollbruchstelle ein Restteil der Unterstützungsstruktur an dem Zahnbogen verbleibt. Der Zahnbogen wird an einer Prothesenbasis befestigt, wobei der Restteil der Unterstützungsstruktur vollständig oder teilweise in eine Aussparung der Prothesenbasis eingesetzt wird.

Dadurch wird beispielsweise der technische Vorteil erreicht, dass ein fester Verbund zwischen den beiden Dentalobjekten erreicht wird. Zudem kann ein Klebespalt zwischen den Dentalobjekten erzeugt werden. Der Klebespalt kann einen Abstand zwischen den Dentalobjekten von 50 µm aufweisen. Dadurch wird beispielsweise der technische Vorteil erreicht, dass ein Formschluss zwischen den Dentalobjekten erzeugt wird und sich die Stabilität der Verbindung verbessert. Zudem wird beispielsweise der technische Vorteil erreicht, dass ein Zahnbogen fest an einer Prothesenbasis befestigt werden kann.

Dadurch wird beispielsweise der technische Vorteil erreicht, dass händische Tätigkeiten verringert werden und die Prozessattraktivität steigt. Das Dentalobjekt wird geschont, da kein Fräsen von Überständen nötig ist. Das Restteil kann anschließenden Stabilisierung des Dentalobjektes verwendet werden.

In einer technisch vorteilhaften Ausführungsform des Verfahrens ist die Sollbruchstelle in einem vorgegebenen Abstand zum Dentalobjekt angeordnet. Dadurch wird beispielsweise der technische Vorteil erreicht, dass das Restteil am Dentalobjekt eine vorgegebene Länge aufweist.

In einer weiteren technisch vorteilhaften Ausführungsform des Verfahrens verjüngt sich die Unterstützungsstruktur zur Sollbruchstelle hin. Das Verjüngen der Unterstützungsstruktur kann von beiden Seiten der Unterstützungsstruktur zur Sollbruchstelle hin erfolgen oder lediglich von einer Seite. Dadurch wird beispielsweise der technische Vorteil erreicht, dass der Restteil sich einfach in eine gegenüberliegende Aussparung einsetzen lässt.

In einer weiteren technisch vorteilhaften Ausführungsform des Verfahrens verbleibt nach dem Trennen der Sollbruchstelle eine vorgegebene Restmenge der Unterstützungsstruktur am Dentalobjekt verbleibt. Dadurch wird beispielsweise der technische Vorteil erreicht, dass eine ausreichende Stabilität des Restteils sichergestellt werden kann.

In einer weiteren technisch vorteilhaften Ausführungsform des Verfahrens wird die Unterstützungsstruktur mit der Sollbruchstelle automatisch durch einen Algorithmus geplant. Die Sollbruchstellen können beispielsweise von dem Algorithmus in einen CAM-Datensatz integriert werden. Dadurch wird beispielsweise der technische Vorteil erreicht, dass sich der Aufwand für die Herstellung des Dentalobjektes verringert.

In einer weiteren technisch vorteilhaften Ausführungsform des Verfahrens werden das Dentalobjekt und/oder die Unterstützungsstruktur mittels eines 3D-Druckverfahrens hergestellt. Dadurch wird beispielsweise der technische Vorteil erreicht, dass sich das Dentalobjekt und die Unterstützungsstruktur auf einfache Weise herstellen lassen.

In einer weiteren technisch vorteilhaften Ausführungsform des Verfahrens erzeugt das Restteil einen Klebespalt zwischen den Dentalobjekten. Der Klebespalt entsteht beispielsweise dadurch, dass der oder die Restteile eine kleinere oder größere Länge aufweisen als die Tiefe der Aussparungen. Wenn die Restteile eine größere Länge als die Tiefe der entsprechenden Aussparungen haben, entsteht der Klebespalt außerhalb der Aussparungen. Wenn die Restteile eine kleinere Länge als die Tiefe der entsprechenden Aussparungen haben, entsteht der Klebespalt innerhalb der Aussparungen. In diesem Fall dringen die Restteile nicht vollständig in die Aussparungen ein. Dies ist bevorzugt, wenn die gedruckten Dentalobjekte zusammengefügt werden.

Auf diese Weise kann ein Spalt oder Abstand zwischen den Dentalobjekten erzeugt werden, in den ein Kleber eindringen kann. Dadurch wird beispielsweise der technische Vorteil erreicht, dass sich die Festigkeit einer Klebeverbindung erhöht.

Ein Dentalobjekt mit einer Unterstützungsstruktur umfasst eine Sollbruchstelle, die so angeordnet ist, dass nach dem Trennen der Sollbruchstelle ein Restteil der Unterstützungsstruktur an dem Dentalobjekt verbleibt. Durch das Dentalobjekt werden die gleichen technischen Vorteile wie durch das Verfahren nach dem ersten Aspekt erreicht.

In einer technisch vorteilhaften Ausführungsform des Dentalobjekts ist die Sollbruchstelle in einem vorgegebenen Abstand zum Dentalobjekt angeordnet. Dadurch wird beispielsweise ebenfalls der technische Vorteil erreicht, dass das Restteil am Dentalobjekt eine vorgegebene Länge aufweist.

In einer weiteren technisch vorteilhaften Ausführungsform des Dentalobjektes verjüngt sich die Unterstützungsstruktur zur Sollbruchstelle hin. Dadurch wird beispielsweise ebenfalls der technische Vorteil erreicht, dass der Restteil sich einfach in eine gegenüberliegende Aussparung einsetzen lässt.

In einer weiteren technisch vorteilhaften Ausführungsform des Dentalobjektes ist das Dentalobjekt ein Zahnbogen. Dadurch wird beispielsweise der technische Vorteil erreicht, dass ein Zahnbogen erzeugt wird, der fest an einer Prothesenbasis befestigt werden kann.

Gemäß einem zweiten Aspekt wird die technische Aufgabe durch ein Dentalobjektsystem mit einem Zahnbogen mit einem Restteil einer Unterstützungsstruktur, der nach dem Trennen einer Sollbruchstelle der Unterstützungsstruktur an dem Zahnbogen verbleibt; und einer Prothesenbasis mit einer Aussparung, in die der Restteil der Unterstützungsstruktur vollständig oder teilweise einsetzbar ist und der Zahnbogen an der Prothesenbasis befestigbar ist. Durch das Dentalobjektsystem werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Darstellung eines Dentalobjekts mit Unterstützungsstrukturen; und
- Fig. 2: eine schematische Darstellung eines Dentalobjektsystem mit zwei Dentalobjekten.

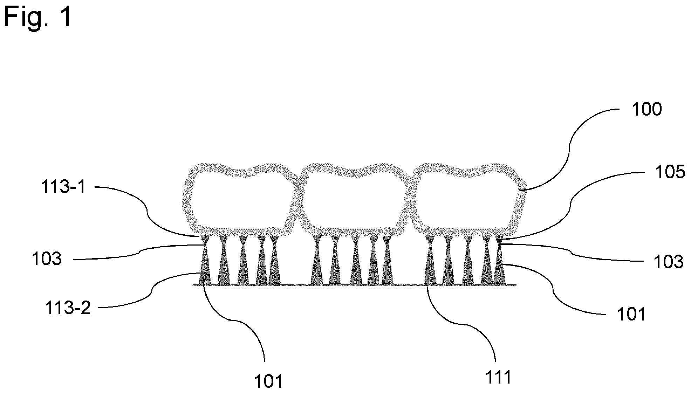

Fig. 1 zeigt eine schematische Darstellung eines Dentalobjekts 100 mit Unterstützungsstrukturen 101. Das Dentalobjekt 100 ist beispielsweis ein künstlich hergestellter Zahnbogen oder Zahn. Die Herstellung des Dentalobjekts 100 kann beispielsweise mittels eines 3D-Druckverfahrens erfolgen. Bei einem 3D-Druckverfahren wird das Dentalobjekt 100 schichtweise in der gewünschten Form aufgebaut. Das Dentalobjekt 100 und die Unterstützungsstrukturen 101 können beispielsweise aus einer Keramik, einer Glaskeramik, einer Oxidkeramik, einer Metallkeramik, aus vernetzten oder unvernetzten Kunststoffen, aus Komposit-Material, einem Metall hergestellt sein.

Bei der Herstellung des Dentalobjektes 100 werden mehrere stab- oder säulenförmige Unterstützungsstrukturen 101 erzeugt, die sich brückenförmig zwischen dem Dentalobjekt 100 und einer Grundfläche 111 erstrecken. Die Unterstützungsstrukturen 101 stützen das Dentalobjekt 100 mechanisch gegenüber der Grundfläche 111 ab. Die Unterstützungsstrukturen 101 weisen beispielsweise eine Länge von 2 bis 100 mm, eine Breite von 1 bis 2 mm, und einen Abstand von 0.3 bis 1 mm, 1 bis 3 mm, 4 bis 8 mm oder 8 bis 12 mm auf.

In den Unterstützungsstrukturen 101 ist eine Sollbruchstelle 103 integriert und angeordnet. Durch die Sollbruchstelle 103 kann die jeweilige Unterstützungsstruktur 101 durch das Einwirken einer mechanischen Kraft an der Sollbruchstelle 103 getrennt werden. Die Sollbruchstelle 103 ist in einem vorgegebenen Abstand zum Dentalobjekt 100 angeordnet.

Die Sollbruchstelle 103 ist so gestaltet, dass eine definierte Restmenge der Unterstützungsstruktur 101 nach dem Abbrechen am Dentalobjekt 100 als Restteil 105 stehen bleibt. Das Restteil 105 ragt an der Unterseite der Dentalobjektes 100 heraus. Das Restteil 105 kann beispielsweise eine konische Form aufweisen. Im Allgemeinen sind aber auch andere Formen möglich. Die Unterstützungsstrukturen 101 mit den Sollbruchstellen 103 können zusammen mit dem Dentalobjekt 100 in dem 3D-Druckverfahren hergestellt werden.

Die Sollbruchstelle 103 ist beispielsweise durch zwei konisch gegeneinander zulaufende Abschnitte 113-1 und 113-2 der Unterstützungsstruktur 101 gebildet. An der Stelle mit dem geringsten Querschnitt entsteht die Sollbruchstelle 103. Die Sollbruchstelle 103 kann auch einseitig durch einen konischen Abschnitt der Unterstützungsstruktur 101 gebildet sein. Im Allgemeinen sind jedoch auch Unterstutzungsstrukturen 101 mit anderen Geometrien möglich, wie beispielsweise zylindrisch, konvex oder konkav zulaufend oder pyramidal.

Wenn sich der Restteil 105 zum Dentalobjekt 100 hin verbreitert, entsteht der technische Vorteil, dass dieser auf einfache und selbstzentrierende Weise in eine entsprechende Aussparung eingesetzt werden kann. Zudem entsteht durch die Restteile 105 der technische Vorteil einer Oberflächenvergrößerung, so dass sich ein eingesetzter Kleber über eine größere Fläche verteilt und eine größere Haftung beim Kleben ermöglicht wird.

Die Unterstützungsstrukturen 101 mit den Sollbruchstellen 103 können beispielsweise bei der Gestaltung des Dentalobjekts 100 durch einen Benutzer an einem Computer im Rahmen eines CAD/CAM-Verfahrens automatisch berechnet und geplant werden. Hierbei kann der Computer die Anzahl und Form der Unterstützungsstrukturen 101 automatisch bestimmt werden und dem Benutzer vorgegeben werden. Gleiches gilt für die Sollbruchstellen 103, deren Anordnung innerhalb der Unterstützungsstrukturen 101 ebenfalls automatisch berechnet werden kann. Hierzu kann ein Algorithmus verwendet werden, der die Positionen aus einer Anzahl von Beispielen für das Dentalobjekt 100 selbstständig lernt. Bei der Definition der Positionierung der Unterstützungsstrukturen 101 kann dann der Einbau der Sollbruchstelle 103 automatisch erfolgen.

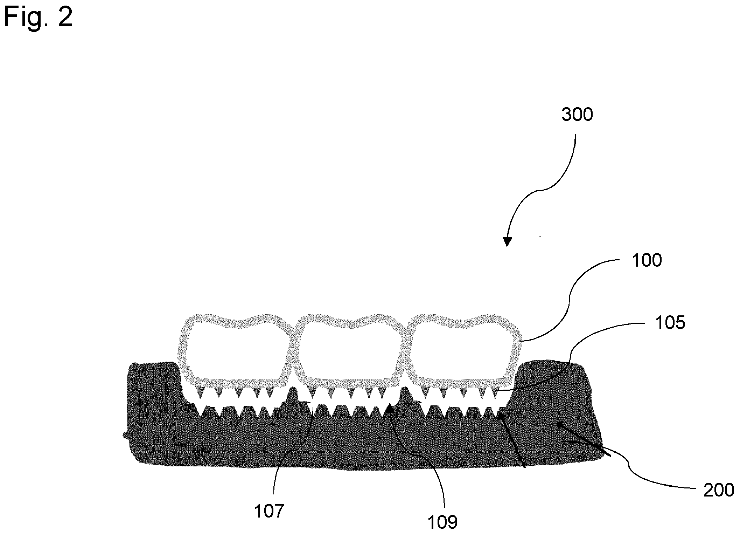

Fig. 2 zeigt eine schematische Darstellung eines Dentalobjektsystems 300 mit zwei Dentalobjekten 100 und 200. Das Dentalobjekt 100 ist ein Zahnbogen, der mittels eines 3D-Druckverfahrens hergestellt worden ist. Die Unterstützungsstrukturen 101 sind an den Sollbruchstellen 103 getrennt worden, so dass diese als Restteile 105 an dem Zahnbogen verbleiben.

Das Dentalobjekt 100 wird in ein weiteres Dentalobjekt 200 eingesetzt, wie beispielsweise eine Prothesenbasis. Das Dentalobjekt 200 umfasst konische Aussparungen 107, die den Restteilen 105 am Dentalobjekt 100 entsprechen. Im Allgemeinen können die Aussparungen 107 aber auch eine andere Geometrie aufweisen, solange die Restteile 105 in diese eingesetzt werden können. Diese sind an Positionen angeordnet, die den Positionen der gegenüberliegenden Restteile 105 entsprechen.

Beim Einsetzen des Dentalobjektes 100 kann ein wesentlicher Formschluss zwischen herausstehenden Restteilen 105 und den Aussparungen 107 erzielt werden. Durch die nach außen hin geringer werdende Breite der Restteile 105 kann ein Einsetzen des einen Dentalobjektes 100 in das andere Dentalobjekt 200 erleichtert werden.

Durch die Oberflächenvergrößerung durch die Restteile 105 kann der Verbund zwischen den zwei Dentalobjekten 100 und 200 verbessert werden. Es ist aber auch möglich, dass durch das Schlüssel-Schloss-Prinzip, das sich aus den Restteilen 105 und den Aussparungen 107 ergibt, eine Positionierung vereinfacht oder verbessert wird. Die Restteile 105 der Unterstützungsstrukturen 101 müssen nicht zwingend entfernt werden.

Die Restteile 105 und die Aussparungen 107 können allerdings auch so dimensioniert sein, dass nach dem Einsetzen des Dentalobjektes 100 ein Klebespalt 109 zwischen den Dentalobjekten 100 und 200 verbleibt. In diesem Fall weisen die Restteile 105 beispielsweise eine Länge auf die größer als die Tiefe der Aussparungen 107 ist. Aus diesem Klebespalt 109, der idealerweise in einer Verbundfläche für die Verklebung gebildet ist, wird ein Freiraum zwischen den Dentalobjekten 100 und 200 erzeugt, aus dem ein verwendeter Kleber nicht verdrängt wird.

Besonders im Bereich der Totalprothetik bei einer Verklebung eines Zahnbogens mit einer Prothesenbasis kann im Rahmen des Designs ein definierter Klebespalts 109 erzeugt werden. Die Restteile 105 können dieses Spaltmaß nach dem Einsetzen in die Aussparungen 107 bilden. Bei der Verkleinerung des Spaltmaßes entstehen Vorteile bei der Verwendung eines dünnflüssigen Klebers oder einer Verklebung von unvergüteten Dentalobjekten 100 mit Kunststoff aus dem Bauprozess oder durch einen Verbund der inhibierten Oberflächen.

Die Unterstützungsstrukturen 101 können auch keinen Klebespalt 109 mit einer größeren Länge im Vergleich zu den Aussparungen 107 erzeugen. In diesem Fall werden die Restteile 105 in den Aussparungen 107 aufgenommen und ermöglichen wegen des wesentlichen Formschlusses ohne Abstandhalter einen Klebespalt 109.

Als Alternative ist es denkbar, dass die verbleibenden Restteile 105 vollständig oder teilweise in die Aussparungen 107 eingreifen und so einen minimalen Klebespalt ausbilden. Erfolgt beispielsweise die Verklebung der Dentalobjekte 100 und 200 nur anhand der inhibierten Oberflächen, können so Hohlräume zwischen den Restteilen 105 und Aussparungen 107 entstehen.

Bei der Verkleinerung des Spaltmaßes des Klebespalts 109 entstehen Vorteile bei der Verwendung eines dünnflüssigen Klebers oder einer Verklebung von unvergüteten Dentalobjekten 100 mit Kunststoff aus dem Bauprozess oder durch einen Verbund der inhibierten Oberflächen.

Auf diese Weise können durch die abgetrennten Unterstützungsstrukturen 101 Stützstrukturen oder Verstärkungsstrukturen für die Teilprothetik gebildet werden. Das Konzept ist auf andere Anwendungsfelder abseits des Dentalbereiches übertragbar.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 101: Unterstützungsstruktur
- 103: Sollbruchstelle
- 105: Restteil
- 107: Aussparung
- 109: Klebespalt
- 111: Grundfläche

- 200: Dentalobjekt

- 300: Dentalobjektsystem

## Patentansprüche

1. Verfahren zum Herstellen eines Dentalobjektsystems (100, 200) aus einem Zahnbogen (100) und einer Prothesenbasis (200), mit den Schritten:
- Erzeugen einer Unterstützungsstruktur (101) an dem Zahnbogen (100) mit einer Sollbruchstelle (103), die so angeordnet ist, dass nach dem Trennen der Sollbruchstelle (103) ein Restteil (105) der Unterstützungsstruktur (101) an dem Zahnbogen (100) verbleibt; und
- Befestigen des Zahnbogens (100) an einer Prothesenbasis (200), wobei der Restteil (105) der Unterstützungsstruktur (101) vollständig oder teilweise in eine Aussparung (107) der Prothesenbasis (200) eingesetzt wird.

2. Verfahren nach Anspruch 1, wobei die Sollbruchstelle (103) in einem vorgegebenen Abstand zum oder am Zahnbogen(100) angeordnet ist.

3. Verfahren nach einem der vorangehenden Ansprüche, wobei die Unterstützungsstruktur (101) sich zur Sollbruchstelle (103) hin verjüngt.

4. Verfahren nach einem der vorangehenden Ansprüche, wobei die Unterstützungsstruktur (101) mit der Sollbruchstelle (103) automatisch durch einen Algorithmus geplant wird.

5. Verfahren nach einem der vorangehenden Ansprüche, wobei der Zahnbogen (100) und/oder die Unterstützungsstruktur (101) eines 3D-Druckverfahrens hergestellt werden.

6. Verfahren nach Anspruch 1, wobei das Restteil (105) einen Klebespalt (109) zwischen dem Zahnbogen (100) und der Prothesenbasis (200) erzeugt.

7. Dentalobjektsystem (100, 200) mit:
einem Zahnbogen (100) mit einem Restteil (105) einer Unterstützungsstruktur (101), der nach dem Trennen einer Sollbruchstelle (103) der Unterstützungsstruktur (101) an dem Zahnbogen (100) verbleibt; und
einer Prothesenbasis (200) mit einer Aussparung (107), in die der Restteil (105) der Unterstützungsstruktur (101) vollständig oder teilweise einsetzbar ist und der Zahnbogen (100) an der Prothesenbasis (200) befestigbar ist.

8. Dentalobjektsystem (100, 200) nach Anspruch 7, wobei der Restteil (105) der Unterstützungsstruktur (101) vollständig oder teilweise in die Aussparung (107) eingesetzt ist und der Zahnbogen (100) an der Prothesenbasis (200) befestigt ist.

## Claims

1. A method of producing a dental object system (100, 200) from a dental arch (100) and a prosthesis base (200), comprising the steps of:
- producing a support structure (101) on the dental arch (100) with a predetermined breaking point (103) which is arranged such that a residual portion (105) of the support structure (101) remains on the dental arch (100) after separation of the predetermined breaking point (103); and
- attaching the dental arch (100) to a prosthesis base (200), wherein the residual portion (105) of the support structure (101) is inserted fully or partially into a recess (107) of the prosthesis base (200).

2. The method according to claim 1, wherein the predetermined breaking point (103) is arranged at a predetermined distance from or on the dental arch (100).

3. The method according to any of the preceding claims, wherein the support structure (101) tapers towards the predetermined breaking point (103).

4. The method according to any of the preceding claims, wherein the support structure (101) with the predetermined breaking point (103) is automatically planned by an algorithm.

5. The method according to any of the preceding claims, wherein the dental arch (100) and/or the support structure (101) are produced by a 3D printing process.

6. The method according to claim 1, wherein the residual portion (105) generates an adhesive gap (109) between the dental arch (100) and the prosthesis base (200).

7. A dental object system (100, 200), comprising:
a dental arch (100) with a residual portion (105) of a support structure (101) which remains on the dental arch (100) after separation of a predetermined breaking point (103) of the support structure (101); and
a prosthesis base (200) with a recess (107) into which the residual portion (105) of the support structure (101) can be inserted fully or partially and the dental arch (100) can be attached to the prosthesis base (200).

8. The dental object system (100, 200) according to claim 7, wherein the residual portion (105) of the support structure (101) is inserted fully or partially in the recess (107) and the dental arch (100) is attached to the prosthesis base (200).

## Revendications

1. Procédé de fabrication d'un système d'objets dentaires (100, 200) composé d'une arcade dentaire (100) et d'une base d'implant (200), comprenant les étapes suivantes :
- création d'une structure de support (101) sur l'arcade dentaire (100) avec un point de rupture prédéterminé (103) qui est disposé de telle sorte qu'après la séparation du point de rupture prédéterminé (103), une partie résiduelle (105) de la structure de support (101) reste sur l'arcade dentaire (100) ; et
- fixation de l'arcade dentaire (100) à une base d'implant (200), où la partie résiduelle (105) de la structure de support (101) est insérée entièrement ou partiellement dans un évidement (107) de la base de la prothèse (200).

2. Procédé selon la revendication 1, où le point de rupture prédéterminé (103) est situé à une distance spécifiée de ou sur l'arcade dentaire (100).

3. Procédé selon l'une des revendications précédentes, où la structure de support (101) se rétrécit vers le point de rupture prédéterminé (103).

4. Procédé selon l'une des revendications précédentes, où la structure de support (101) avec le point de rupture prédéterminé (103) est automatiquement planifiée par un algorithme.

5. Procédé selon l'une des revendications précédentes, où l'arcade dentaire (100) et/ou la structure de support (101) sont fabriqués au moyen d'un procédé d'impression 3D.

6. Procédé selon la revendication 1, où la partie résiduelle (105) crée un espace adhésif (109) entre l'arcade dentaire (100) et la base de la prothèse (200).

7. Système d'objets dentaires (100, 200) comprenant :
une arcade dentaire (100) ayant une partie résiduelle (105) d'une structure de support (101) qui reste sur l'arcade dentaire (100) après la séparation d'un point de rupture prédéterminé (103) de la structure de support (101) ; et
une base d'implant (200) avec un évidement (107) dans lequel la partie résiduelle (105) de la structure de support (101) peut être insérée entièrement ou partiellement et l'arcade dentaire (100) peut être fixée à la base d'implant (200).

8. Système d'objet dentaire (100, 200) selon la revendication 7, où la partie résiduelle (105) de la structure de support (101) est entièrement ou partiellement inséré dans l'évidement (107) et l'arcade dentaire (100) est fixée à la base d'implant (200).
